# EUROPEAN PATENT APPLICATION

(11) **EP 4 653 214 A1**
(43) Date of publication of application: **26.11.2025**
(21) Application number: 23916856.0
(22) Date of filing: 20.01.2023
(51) Int. Cl.: B60K 1/04, B60L 53/80

(54) **MOUNTING FRAME AND VEHICLE**

(71) Applicant: Contemporary Amperex Technology (Hong Kong) Limited, Hong Kong (HK)
(72) Inventor: WU, Shouyong, Ningde, Fujian 352100 (CN); CAO, Gen, Ningde, Fujian 352100 (CN); CHAN, Libing, Ningde, Fujian 352100 (CN); JIANG, Yuwei, Ningde, Fujian 352100 (CN); LIU, Bin, Ningde, Fujian 352100 (CN)
(74) Representative: Gong, Jinping
(86) International application number: PCT/CN2023/073416
(87) International publication number: WO 2024/152378

(57) **Abstract**

Provided are a mounting frame (300) and a vehicle (1000). The mounting frame (300) is configured to mount a battery (100) to a vehicle body (200), the mounting frame (300) is provided with a mounting portion (30), and the mounting portion (30) is configured to connect the mounting frame (300) to the vehicle body (200).

## Description

### TECHNICAL FIELD

The present application relates to the technical field of vehicles, and in particular, to a mounting frame and a vehicle.

### BACKGROUND

In recent years, new energy vehicles have been rapidly developed. In the field of electric vehicles, battery, as a power source for electric vehicles, plays an irreplaceable role. To deploy the battery on the vehicle, generally, a corresponding mounting structure is disposed on the vehicle according to the structure of the battery and features of a mounting point, to meet the requirement for mounting the battery to the vehicle, or a corresponding mounting structure is machined on the battery according to the structure of the vehicle and features of a mounting point, to meet the requirement for mounting the battery to the vehicle. Consequently, the design and machining difficulties of the vehicle are increased, or the design and machining difficulties of the battery are increased.

### SUMMARY

Embodiments of the present application provide a mounting frame and a vehicle, to reduce the design and machining difficulties of a battery and a vehicle body while satisfying the requirement for mounting the battery on the vehicle.

According to the first aspect, an embodiment of the present application provides a mounting frame, where the mounting frame is configured to mount a battery to a vehicle body, the mounting frame is provided with a mounting portion, and the mounting portion is configured to connect the mounting frame to the vehicle body.

In the above technical solution, the mounting frame is disposed between the vehicle body and the battery to implement the mounting of the battery to the vehicle body, so that the form and construction of the mounting frame can be flexibly designed according to the features of the vehicle body and features of the battery, to meet the requirement for mounting the battery on a vehicle, thereby reducing the design and machining difficulties of the battery and the vehicle body.

In some embodiments, the mounting frame includes two side frame portions and a middle frame portion connecting the two side frame portions, and the two side frame portions are configured to be respectively located at two sides of a vertical space in which an underbody longitudinal beam of the vehicle body is located.

In the above technical solution, since the mounting frame includes the two side frame portions and the middle frame portion, the mounting frame has good structural strength and a high capability to carry the battery, thereby improving the stability of the battery carried on the vehicle. In addition, since the mounting frame includes the side frame portions respectively located at the two sides of the vertical space in which the underbody longitudinal beam of the vehicle body is located, the mounting frame can make full use of an underbody space, which is conducive to carrying the battery with a larger capacity.

In some embodiments, at least a part of the side frame portion is configured to be higher than a lower end of the underbody longitudinal beam and located at a side of the underbody longitudinal beam.

In the above technical solution, the side frame portion is not entirely lower than the underbody longitudinal beam, so that it is conducive to dispose at least a part of the side frame portion in both horizontal side spaces of the underbody longitudinal beam, thereby improving the space utilization rate.

In some embodiments, the side frame portion is configured to be located between the vehicle body and the battery.

In the above technical solution, since at least a part of the side frame portion is located between the vehicle body and the battery, the side frame portion can be desirably concealed and protected by the battery and the vehicle body, thereby reducing the probability that the part is corroded by muddy water or is damaged by an impact from a foreign object, and further improving the stability of the battery carried on the vehicle.

In some embodiments, the side frame portion is configured to extend in a length direction of the underbody longitudinal beam, and is sandwiched between the battery and a side wall of the underbody longitudinal beam.

In the above technical solution, the side frame portion can be protected by the battery and the underbody longitudinal beam, thereby reducing the probability that the side frame portion is corroded by muddy water or is damaged by an impact from a foreign object, and further improving the stability of the battery carried on the vehicle. In addition, a dimension of the side frame portion in a width direction of the underbody longitudinal beam is relatively small, thereby reducing a risk that the side frame portion is broken and a risk that a joint between the side frame portion and the middle frame portion is broken, to improve the structural reliability of the mounting frame.

In some embodiments, the mounting portion includes a first mounting portion disposed on the side frame portion.

In the above technical solution, since the side frame portions are located at the two sides of the vertical space in which the underbody longitudinal beam is located, and the first mounting portion is disposed on the side frame portion, it indicates that the first mounting portion may also be located at an outer side of the underbody longitudinal beam, on which side there is sufficient space for use. Therefore, on the one hand, the connection of the first mounting portion with the vehicle body is facilitated, and on the other hand, the flexible design of the first mounting portion is facilitated.

In some embodiments, the side frame portion includes a first extension portion that extends in the length direction of the underbody longitudinal beam and is sandwiched between the battery and the side wall of the underbody longitudinal beam, and the first mounting portion is disposed on the first extension portion and is configured to connect to the side wall of the underbody longitudinal beam.

In the above technical solution, the first mounting portion is disposed on the first extension portion that is sandwiched between the battery and the underbody longitudinal beam, so that the first mounting portion is also easily concealed and protected by the battery and the underbody longitudinal beam, thereby improving the reliability of connection of the first mounting portion with the underbody longitudinal beam.

In some embodiments, the first mounting portion is configured to connect to the side wall of the underbody longitudinal beam through a first fastener extending in a transverse direction.

In the above technical solution, the connection of the first mounting portion with the vehicle body can be simplified, and the reliability of connection of the first mounting portion with the vehicle body can be improved. In addition, the structures and machining of the side frame portion and the underbody longitudinal beam can be simplified, and the fitting compactness of the side frame portion with the underbody longitudinal beam can be improved.

In some embodiments, a plurality of first mounting portions are disposed on the first extension portion, and the plurality of first mounting portions are configured to be disposed spaced apart in the length direction of the underbody longitudinal beam.

In the above technical solution, since the plurality of first mounting portions are disposed spaced apart in the length direction of the underbody longitudinal beam, and space of the first extension portion can be fully used, so that more first mounting portions are disposed to improve the reliability of connection of the mounting frame with the vehicle body. In addition, the plurality of first mounting portions are not likely to interfere with the underbody longitudinal beam when being connected to the underbody longitudinal beam, thereby facilitating the connection operation.

In some embodiments, the mounting frame includes a frame body and a mounting lug, the mounting lug is fitted to the frame body, and the mounting lug defines the first mounting portion.

In the above technical solution, since the first mounting portion is defined by the mounting lug fitted to the frame body, the design and machining difficulties of the frame body can be reduced, and the design and machining requirements of the first mounting portion can be favorably met.

In some embodiments, the mounting lug is detachably connected to the frame body.

In the above technical solution, the requirements such as removal and replacement of the mounting lug can be satisfied, so that the adaptability can be improved.

In some embodiments, the mounting frame further includes a gasket, and the gasket is detachably disposed between the mounting lug and the frame body.

In the above technical solution, it is possible to determine whether to mount the gasket or select the specific specification of the gasket to be mounted according to an actual situation of a vehicle model and an actual situation of a mounting point on the vehicle body, to adapt to the mounting requirements of different vehicle models.

In some embodiments, the mounting portion includes a first connection portion disposed on the side frame portion, and the first connection portion is configured to connect the mounting frame to the battery.

In the above technical solution, the stability and reliability of the fitting of the battery and the mounting frame can be improved, thereby improving the stability of the battery carried on the vehicle, and facilitating the connection of the first connection portion with the battery.

In some embodiments, the first connection portion is configured to be located between the battery and the side wall of the underbody longitudinal beam.

In the above technical solution, since the first connection portion is located between the battery and the side wall of the underbody longitudinal beam of the vehicle body, the first connection portion can be desirably concealed and protected by the battery and the vehicle body, thereby reducing the probability that the first connection portion is corroded by muddy water or is damaged by an impact from a foreign object, further improving the reliability of connection of the battery with the mounting frame, and facilitating the removal and replacement of the battery.

In some embodiments, the first connection portion includes a plurality of connection sub-portions, and the plurality of connection sub-portions are configured to be disposed spaced apart in the length direction of the underbody longitudinal beam.

In the above technical solution, since the plurality of connection sub-portions are disposed spaced apart in the length direction of the underbody longitudinal beam, and space can be fully used, more connection sub-portions are disposed to improve the reliability of connection of the mounting frame with the battery. In addition, the plurality of connection sub-portions are not likely to interfere with the battery when being connected to or disconnected from the battery, thereby facilitating the removal and replacement of the battery.

In some embodiments, the first connection portion is configured to detachably connect to the battery.

In the above technical solution, since the first connection portion is configured to detachably connect to the battery, the battery can be removed and replaced.

In some embodiments, the mounting frame includes a frame body and a connection lock, the connection lock is fitted to the frame body, the connection lock forms the first connection portion, and the connection lock has a locked state for locking the battery and an unlocked state for releasing the battery.

In the above technical solution, the first connection portion can be detachably connected to the battery, so that the battery can be removed and replaced. In addition, since the first connection portion is defined by the connection lock fitted to the frame body, different forms of connection locks may be selected or designed, to satisfy the mounting requirements of different batteries, thereby simplifying the design and machining of the frame body, and meeting the structural and dimensional requirements of the frame body itself.

In some embodiments, at least a part of the middle frame portion is configured to be located below the underbody longitudinal beam, and an avoidance space having an opening at a top thereof and configured to avoid the underbody longitudinal beam is defined between the middle frame portion and the side frame portion.

In the above technical solution, the mounting frame can be fitted to the underbody longitudinal beam from bottom to top, thereby simplifying the mounting of the mounting frame to the vehicle body, improving the assembly efficiency, and simplifying the machining of the underbody longitudinal beam.

In some embodiments, the middle frame portion and two ends are respectively connected to lower ends of the side frame portions at the two sides.

In the above technical solution, it is conducive to simplifying the connection of the side frame portion with the middle frame portion, and it is conducive to increasing a height of the side frame portion relative to the underbody longitudinal beam, thereby reducing as much as possible a space occupied below the underbody longitudinal beam by the side frame portion.

In some embodiments, the middle frame portion is provided with an upward protrusion, the upward protrusion is configured to extend into a position between two side longitudinal beams of the underbody longitudinal beam, and a cavity formed below the upward protrusion is configured to accommodate a part of the battery.

In the above technical solution, since a part of the battery may extend into the cavity formed below the upward protrusion, and the part is located between the two side longitudinal beams of the underbody longitudinal beam, the underbody space can be fully used to dispose the battery, thereby improving the electric capacity of the battery.

In some embodiments, the middle frame portion is provided with an avoidance opening, and the avoidance opening is configured to be formed corresponding to a space between the two side longitudinal beams of the underbody longitudinal beam.

In the above technical solution, the part of the battery may extend, through the avoidance opening, into the position between the two side longitudinal beams of the underbody longitudinal beam, so that the underbody space can be fully used to dispose the battery, thereby improving the electric capacity of the battery.

In some embodiments, the mounting portion includes a second mounting portion disposed on the middle frame portion, and the second mounting portion is configured to connect to the underbody longitudinal beam.

In the above technical solution, the second mounting portion is disposed by using the middle frame portion connecting the side frame portions at the two sides, so that the connection of the second mounting portion with the underbody longitudinal beam can be easily implemented. The underbody longitudinal beam is connected to the mounting frame, thereby reducing the limitation to the vehicle model can be reduced, and improving an application scope of the mounting frame.

In some embodiments, the second mounting portion is configured to connect to a bottom wall of the underbody longitudinal beam through a second fastener extending in a vertical direction.

In the above technical solution, the connection of the second mounting portion with the underbody longitudinal beam can be simplified, and the reliability of connection of the second mounting portion with the underbody longitudinal beam can be improved. In addition, the structures and machining of the middle frame portion and the underbody longitudinal beam can be simplified, and the fitting compactness of the middle frame portion with the underbody longitudinal beam can be improved.

In some embodiments, the middle frame portion includes two second extension portions. The two second extension portions are configured to be respectively located below the two side longitudinal beams of the underbody longitudinal beam and extend in the length direction of the underbody longitudinal beam. A plurality of second mounting portions are disposed on the second extension portion. The plurality of second mounting portions are configured to be disposed spaced apart in the length direction of the underbody longitudinal beam.

In the above technical solution, the connection of the second mounting portion with the underbody longitudinal beam is implemented, and the reliability of connection of the mounting frame with the vehicle body is improved.

In some embodiments, a docking portion is disposed on the middle frame portion, the docking portion is configured to be disposed between the two side longitudinal beams of the underbody longitudinal beam, and the docking portion is configured to be docked with a liquid path and/or a circuit on the battery.

In the above technical solution, since the docking portion is disposed on the middle frame portion, and the middle frame portion is connected to the side frame portions at the two sides, the stability of the middle frame portion is relatively high, which can improve the stability of the docking portion, thereby facilitating the improvement of the stability and reliability of docking of the docking portion with the battery. In addition, since the docking portion is located between the two side longitudinal beams of the underbody longitudinal beam, the docking portion can be protected by the underbody longitudinal beam, thereby reducing the probability that the docking portion is damaged by impacts, alleviating the problem that the docking portion is corroded by muddy water and the like and then fails, and improving the docking reliability and stability. In addition, the docking portion does not need to occupy a space beyond the underbody longitudinal beam, thereby saving a space easily and improving a capacity of the battery.

In some embodiments, a bottom wall of the upward protrusion is provided with a docking portion, and the docking portion is configured to be docked with a liquid path and/or a circuit on the battery.

In the above technical solution, the mounting of the docking portion can be simplified, and the stability of the docking portion can be improved. The docking portion can be protected, thereby reducing the probability that the docking portion is damaged by impacts, alleviating the problem that the docking portion is corroded by muddy water and the like and then fails, and improving the docking reliability and stability.

In some embodiments, the mounting frame includes a baffle disposed on a peripheral side of the docking portion.

In the above technical solution, the baffle is disposed on the mounting frame, so that the docking portion can be protected by the baffle, thereby reducing the probability that the docking portion is damaged by impacts and alleviating the problem that the docking portion is corroded by muddy water and the like and then fails.

In some embodiments, the mounting frame is provided with a docking portion, and the docking portion is configured to be docked with a liquid path and/or a circuit on the battery.

In the above technical solution, the docking portion is disposed on the mounting frame, and the requirement for docking the battery with a circuit and/or a liquid path of the vehicle body can be satisfied through the structural design of the mounting frame, thereby simplifying the structural design of the vehicle body and the battery.

In some embodiments, a docking surface of the docking portion is disposed vertically downward, or obliquely downward, or horizontally.

In the above technical solution, it is convenient to implement the docking of the battery with the docking portion.

In some embodiments, the mounting frame includes an integrally formed integral frame, and the integral frame forms at least a part of the side frame portion and at least a part of the middle frame portion, respectively.

In the above technical solution, the overall structural strength of the mounting frame can be improved, thereby facilitating the improvement of the stability and reliability when the battery is carried on the vehicle.

In some embodiments, the mounting frame is provided with a connection portion, and the connection portion is configured to connect the mounting frame to the battery.

In the above technical solution, the stability and reliability of the fitting of the battery and the mounting frame can be improved, thereby improving the stability of the battery carried on the vehicle.

In some embodiments, at least a part of the connection portion is configured to be located between the battery and the vehicle body.

In the above technical solution, the position of at least a part of the connection portion is concealed, so that the connection portion is not likely to be damaged by impacts or corroded by muddy water and the like, thereby improving the connection reliability and stability of the mounting frame with the battery, and improving the reliability and stability of the battery carried on the vehicle.

In some embodiments, the connection portion is configured to be located between the battery and the side wall of the underbody longitudinal beam of the vehicle body.

In the above technical solution, the position of the connection portion is concealed, so that the connection portion is not likely to be damaged by impacts or corroded by muddy water and the like. In addition, the connection portion has high precision, thereby facilitating the connection with the battery.

In some embodiments, at least a part of the mounting portion is configured to be located between the battery and the vehicle body.

In the above technical solution, the position of at least a part of the mounting portion is concealed, so that the mounting portion is not likely to be damaged by impacts or corroded by muddy water and the like, thereby improving the connection reliability and stability of the mounting frame with the vehicle body and improving the reliability and stability of the battery carried on the vehicle.

In some embodiments, at least a part of the mounting frame is configured to be located between the battery and the underbody longitudinal beam of the vehicle body, so that at least a part of the mounting portion is configured to connect to the underbody longitudinal beam.

In the above technical solution, the mounting frame and the underbody longitudinal beam are reliably connected easily, and mounting can be achieved for various vehicle models, so that an application range is wide.

According to the second aspect, an embodiment of the present application provides a vehicle, including a vehicle body and the above mounting frame, where the mounting frame is connected to the vehicle body.

In some embodiments, the vehicle body includes an underbody longitudinal beam, and the vehicle includes a plurality of mounting frames sequentially disposed in a length direction of the underbody longitudinal beam.

In the above technical solution, the size of each mounting frame may be relatively small, so that the shape precision of each mounting frame can be improved, the connection of each mounting frame with the vehicle body is facilitated, and the structural strength of each mounting frame is improved easily, thereby improving the stability of the battery carried on the vehicle.

In some embodiments, the vehicle further includes a battery, and the battery is mounted to the vehicle body through the mounting frame.

In some embodiments, the vehicle body includes an underbody longitudinal beam, the battery is provided with a recess having an opening at a top thereof and configured to accommodate the underbody longitudinal beam, the battery includes battery cells disposed below the recess and at two sides thereof, and the mounting frame is sandwiched between the recess and the underbody longitudinal beam.

In the above technical solution, the battery can make full use of a space to dispose a larger number of battery cells, thereby improving the electric capacity of the battery. In addition, the battery and the underbody longitudinal beam can be used to protect the mounting frame, so that the position of the mounting frame is concealed, and the mounting frame is not likely to be damaged by impacts or be corroded by muddy water and the like, thereby improving the reliability and stability of the battery carried on the vehicle.

### BRIEF DESCRIPTION OF THE DRAWINGS

To describe the technical solutions of embodiments of the present application more clearly, the following briefly introduces the accompanying drawings required for describing the embodiments. It should be understood that the following accompanying drawings show merely some embodiments of the present application, and therefore should not be viewed as a limitation to the scope. Those of ordinary skill in the art may still derive other related accompanying drawings from these accompanying drawings without creative efforts.
FIG. 1 is a schematic diagram of a vehicle according to some embodiments of the present application;
FIG. 2 is an assembled view of a battery, a mounting frame, and an underbody longitudinal beam according to some embodiments of the present application;
FIG. 3 is an exploded view of the battery, the mounting frame, and the underbody longitudinal beam according to some embodiments of the present application;
FIG. 4 is an assembled view of the mounting frame and the underbody longitudinal beam according to some embodiments of the present application;
FIG. 5 is a schematic diagram of the mounting frame according to some embodiments of the present application;
FIG. 6 is an exploded view of the mounting frame and the underbody longitudinal beam according to some embodiments of the present application.
FIG. 7 is an assembled view of the battery, the mounting frame, and the underbody longitudinal beam according to some embodiments of the present application;
FIG. 8 is a schematic diagram of a mounting frame according to some other embodiments of the present application;
FIG. 9 is an assembled view of the mounting frame and the battery according to some embodiments of the present application; and
FIG. 10 is an exploded view of the mounting frame according to some embodiments of the present application.

### Reference numerals:

1000, vehicle; 100, battery; 101, recess; 200, vehicle body; 201, underbody longitudinal beam; 202, longitudinal beam; 203, cross beam; 300, mounting frame; 10, side frame portion; 11, first extension portion; 20, middle frame portion; 21, avoidance space; 22, upward protrusion; 23, avoidance opening; 24, first sub-frame; 25, second sub-frame; 251, baffle; 26, second extension portion; 30, mounting portion; 31, first mounting portion; 32, second mounting portion; 33, mounting lug; 40, frame body; 50, first connection portion; 51, connection sub-portion; 52, connection lock; 60, docking portion; first direction X; second direction Y; third direction Z.

### DETAILED DESCRIPTION

To make the objectives, technical solutions, and advantages of embodiments of the present application clearer, the following clearly describes the technical solutions in the embodiments of the present application with reference to drawings in the embodiments of the present application. Apparently, the described embodiments are some rather than all of the embodiments of the present application. All other embodiments obtained by those of ordinary skill in the art based on the embodiments of the present application without making creative efforts shall fall within the protection scope of the present application.

Unless otherwise defined, the meanings of all technical and scientific terms used in the present application are the same as those usually understood by those skilled in the art to which the present application belongs. In the present application, the terms used in the description of the present application are merely intended to describe the objectives of the specific embodiments, but are not intended to limit the present application. The terms "include", "have", and any variant thereof in the description and claims of the present application and the above-mentioned drawings are intended to cover a non-exclusive inclusion. The terms "first", "second", and the like in the description and claims of the present application or in the above-mentioned drawings are used to distinguish different objects and are not intended to describe a particular order or relationship of precedence.

Reference to "embodiment" in the present application means that a particular feature, structure or characteristic described in combination with the embodiment may be included in at least one embodiment of the present application. The phrases appearing at different positions of the description may not refer to the same embodiment or an independent or alternative embodiment that is mutually exclusive with other embodiments.

In the description of the present application, it is to be noted that, unless otherwise explicitly specified or defined, the terms "connected", and "connection" should be understood in a broad sense. For example, the connection may be a fixed connection, a detachable connection, or an integral connection; and the connection may be direct connection, or indirect connection through an intermediary. Those of ordinary skill in the art may understand the specific meanings of the above terms in the present application according to specific situations.

In the present application, the term "and/or" merely describes an association relationship of associated objects, and represents that three relationships may exist, for example, A and/or B may represent the following three cases: A exists alone, A and B exist at the same time, and B exists alone. In addition, the character "/" in the present application generally indicates an "or" relationship between the associated objects.

In the embodiments of the present application, same reference numerals represent same components, and for brevity, detailed descriptions for same components are omitted in different embodiments. It should be understood that the dimensions such as the thickness, the length, and the width of various components in the embodiments of the present application and the entire thickness, length, and width of an integrated device are merely exemplary descriptions, and should not be construed as any limitation to the present application.

"A plurality of" appearing in the present application means two or more (including two).

In the present application, battery cells may include a lithium-ion secondary battery, a lithium-ion primary battery, a lithium-sulfur battery, a sodium-lithium-ion battery, a sodium-ion battery, a magnesium-ion battery, or the like, which is not limited in the embodiments of the present application. The battery cell may be in a cylindrical shape, a flat shape, a cuboid shape, or in other shapes, which is not limited in the embodiments of the present application. Generally, according to encapsulating methods, the battery cells are divided into three types: cylindrical battery cells, prismatic battery cells and pouch battery cells, which is not limited in the embodiments of the present application.

A battery mentioned in embodiments of the present application is a single physical module including one or more battery cells to provide a higher voltage and a higher capacity. The battery in the embodiments of the present application includes a casing for encapsulating one or more battery cells or a plurality of battery modules. The battery module consists of a plurality of battery cells. The casing is configured to prevent liquid or other foreign matters from affecting the charging or discharging of the battery cells.

In the battery, the plurality of battery cells may be connected in series, parallel, or series-parallel. The series-parallel connection means that both series connection and parallel connection exist among the plurality of battery cells. The plurality of battery cells may be directly connected in series, parallel, or series-parallel, and then a whole formed by the plurality of battery cells is accommodated in the casing. Of course, the battery may also be in the form that a plurality of battery cells are first connected in series, parallel, or series-parallel to form battery modules, and a plurality of battery modules are then connected in series, parallel, or series-parallel to form a whole which is accommodated in the casing. In addition, the battery may further include other structures, for example, the battery may further include a bus component for achieving the electrical connection between a plurality of battery cells. In recent years, new energy vehicles have been rapidly developed. In the field of electric vehicles, battery, as a power source for electric vehicles, plays an irreplaceable role. It is found that to deploy the battery on the vehicle, generally, a corresponding mounting structure is disposed on the vehicle according to the structure of the battery and features of a mounting point, to meet the requirement for mounting the battery to the vehicle, or a corresponding mounting structure is machined on the battery according to the structure of the vehicle and features of a mounting point, to meet the requirement for mounting the battery to the vehicle. Consequently, the design and machining difficulties of the vehicle are increased, or the design and machining difficulties of the battery are increased.

Through deep research based on the above consideration, a mounting frame is designed. The mounting frame is configured to mount a battery to a vehicle body, the mounting frame is provided with a mounting portion, and the mounting portion is configured to connect the mounting frame to the vehicle body. The mounting frame is disposed between the vehicle body and the battery to implement the mounting of the battery to the vehicle body, so that the form and construction of the mounting frame can be flexibly designed according to the features of the vehicle body and features of the battery, to meet the requirement for mounting the battery on a vehicle, thereby reducing the design and machining difficulties of the battery and the vehicle body.

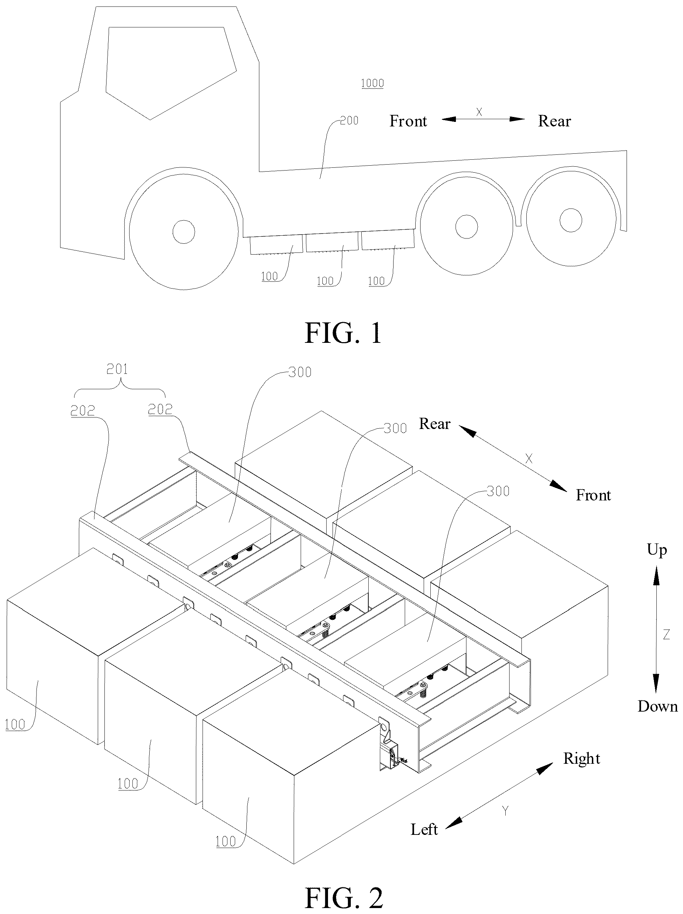

Refer to FIG. 1. FIG. 1 is a schematic structural diagram of a vehicle 1000 according to some embodiments of the present application. A vehicle 1000 may be a fuel powered vehicle, a gas powered vehicle, or a new energy vehicle. The new energy vehicle may be a pure electric vehicle, a hybrid electric vehicle, or an extended range vehicle, etc. The battery 100 may be configured to supply power to the vehicle 1000. For example, the battery 100 may be used as a power supply for operating the vehicle 1000. The vehicle 1000 may further include a controller and a motor. The controller is configured to control the battery 100 to supply power to the motor, for example, to meet the working power requirements during starting, navigation, and traveling of the vehicle 1000. In some embodiments of the present application, the battery 1 can not only serve as the power supply for operating the vehicle 1000, but also can serve as a power supply for driving the vehicle 1000, in place of or partially in place of fuel or natural gas, to provide driving power for the vehicle 1000.

In the following, a mounting frame 300 according to the embodiments of the present application is described with reference to the accompanying drawings.

As shown in FIG. 1 to FIG. 4, the mounting frame 300 is configured to mount the battery 100 to a vehicle body 200. The mounting frame 300 is provided with a mounting portion 30. The mounting portion 30 is configured to connect the mounting frame 300 to the vehicle body 200.

It should be noted that the connection manner between the mounting portion 30 and the vehicle body 200 is not limited. For example, in some embodiments, the mounting portion 30 itself can achieve the connection to the vehicle body 200. For example, the mounting portion 30 is a riveting screw, a snap, or the like. For another example, in some other embodiments, the mounting portion 30 may be connected to the vehicle body 200 through a connection piece. For example, the mounting portion 30 may be a connection hole, a riveting nut, or the like, and may be connected to the vehicle body 200 through a connection piece such as a screw, a bolt, or the like.

It should be noted that the connection relationship between the mounting frame 300 and the battery 100 is not limited. For example, in some embodiments, the mounting frame 300 may be directly or indirectly connected to the battery 100. For another example, in some other embodiments, the mounting frame 300 may not have a connection relationship with the battery 100. For example, the mounting frame 300 may only serve to support and limit the battery 100, but is not connected to the battery 100.

In the above technical solution, the mounting frame 300 is disposed between the vehicle body 200 and the battery 100 to implement the mounting of the battery 100 to the vehicle body 200, so that the form and construction of the mounting frame 300 can be flexibly designed according to the features of the vehicle body 200 and features of the battery 100, to satisfy the requirements in aspects such as connection, carrying, and space utilization rate, thereby reducing the design and machining difficulties of the battery 100 and the vehicle body 200, and achieving high adaptability.

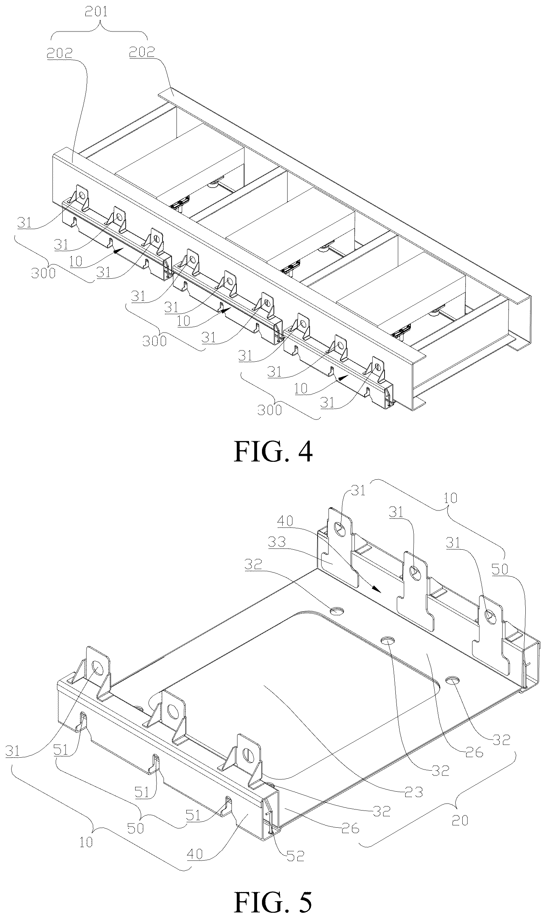

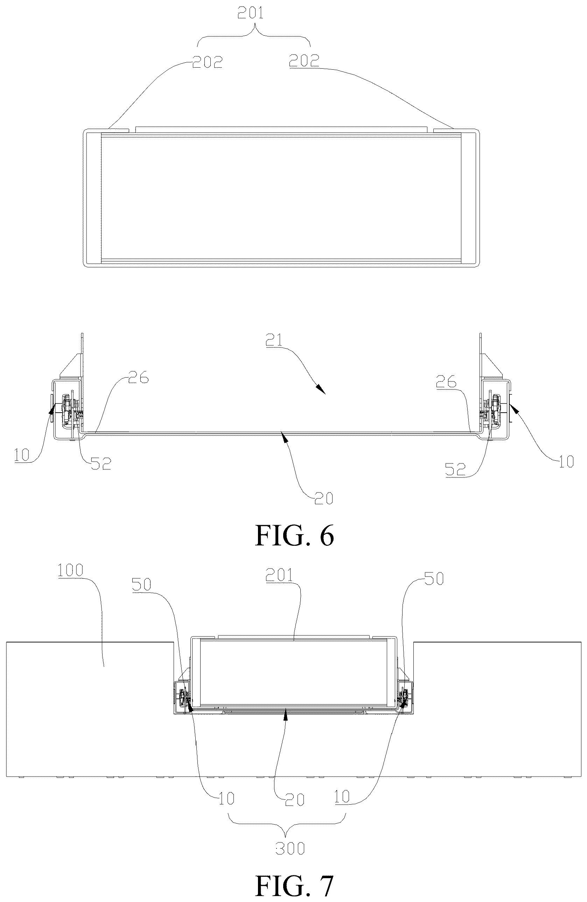

In some embodiments, as shown in FIG. 5 and FIG. 6, the mounting frame 300 includes two side frame portions 10 and a middle frame portion 20 connecting the two side frame portions 10. The two side frame portions 10 are respectively located at two sides of a vertical space in which an underbody longitudinal beam 201 of the vehicle body 200 is located.

It should be noted that herein, a length direction (for example, a first direction X shown in FIG. 1 and FIG. 2) of the underbody longitudinal beam 201 is a front-rear direction of the vehicle body 200, a width direction (for example, a second direction Y shown in FIG. 2) of the underbody longitudinal beam 201 is a left-right direction of the vehicle body 200, and a height direction (for example, a third direction Z shown in FIG. 2) of the underbody longitudinal beam 201 is an up-down direction of the vehicle body 200. The underbody longitudinal beam 201 described herein may also be referred to as a vehicle girder.

The "vertical space in which the underbody longitudinal beam 201 is located" means: a space in which the underbody longitudinal beam 201 is located and a space directly below and a space directly above the space. Therefore, that the two side frame portions 10 are respectively located at two sides of the vertical space in which the underbody longitudinal beam 201 of the vehicle body 200 is located means that a left side and a right side of the vertical space in which the underbody longitudinal beam 201 is located are respectively provided with the side frame portions 10. That is, it is not required that the side frame portion 10 is at the same height as the underbody longitudinal beam 201. For example, the side frame portion 10 may be at the same height as the underbody longitudinal beam 201, or the side frame portion 10 may be lower than the underbody longitudinal beam 201, as long as the side frame portions 10 are located at the left and right sides of the vertical space in which the underbody longitudinal beam 201 is located.

In the above technical solution, since the mounting frame 300 includes the side frame portions 10 and the middle frame portion 20, the mounting frame 300 has good structural strength, and has a high capability to carry the battery 100, thereby improving the stability of the battery 100 carried on the vehicle 1000. In addition, since the mounting frame 300 includes the side frame portions 10 respectively located at the two sides of the vertical space in which the underbody longitudinal beam 201 is located, the mounting frame 300 can make full use of an underbody space, which is conducive to carrying the battery 100 with a larger capacity.

In some embodiments, as shown in FIG. 1 and FIG. 5 to FIG. 7, at least a part of the side frame portion 10 is higher than a lower end of the underbody longitudinal beam 201, so that at least a part of the side frame portion 10 may be located at a side of the underbody longitudinal beam 201.

It should be noted that the "side of the underbody longitudinal beam 201" herein refers to a left side or a right side of the underbody longitudinal beam 201 at a horizontal height.

In the above technical solution, since the side frame portion 10 is not entirely lower than the lower end of the underbody longitudinal beam 201, it is conducive to disposing the side frame portions 10 and even disposing the battery 100 in both horizontal side spaces of the underbody longitudinal beam 201, thereby improving the space utilization rate.

In some embodiments, as shown in FIG. 1 and FIG. 5 to FIG. 7, at least a part of the side frame portion 10 is located between the vehicle body 200 and the battery 100. That is, only a part of the side frame portion 10 is located between the vehicle body 200 and the battery 100, or the side frame portion 10 is entirely located between the vehicle body 200 and the battery 100.

In the above technical solution, since at least a part of the side frame portion 10 is higher than the lower end of the underbody longitudinal beam 201 and is located between the vehicle body 200 and the battery 100, the side frame portion can be desirably concealed and is not directly exposed to the outside, so as to be protected by the battery 100 and the vehicle body 200, thereby reducing the probability that the part is corroded by muddy water or is damaged by an impact from a foreign object, and further improving the stability of the battery 100 carried on the vehicle 1000.

When the side frame portion 10 is entirely located between the vehicle body 200 and the battery 100, the entire side frame portion 10 can be protected by the battery 100 and the vehicle body 200, to reduce the probability that the entire side frame portion 10 is corroded by muddy water or is damaged by an impact from a foreign object, thereby better improving the stability of the battery 100 carried on the vehicle 1000.

In some embodiments, as shown in FIG. 2 to FIG. 5, the side frame portion 10 extends in a length direction (for example, the first direction X shown in FIG. 1 and FIG. 2) of the underbody longitudinal beam 201, and the side frame portion 10 is sandwiched between the battery 100 and a side wall of the underbody longitudinal beam 201.

In the above technical solution, the side frame portion 10 is configured in a form of extending in the length direction of the underbody longitudinal beam 201, so that the side frame portion 10 can be sandwiched between the battery 100 and the side wall of the underbody longitudinal beam 201, and the side frame portion 10 can be protected by the battery 100 and the underbody longitudinal beam 201, thereby reducing the probability that the side frame portion 10 is corroded by muddy water or is damaged by an impact from a foreign object, and improving the stability of the battery 100 carried on the vehicle 1000. In addition, a dimension of the side frame portion 10 in a width direction of the underbody longitudinal beam 201 is relatively small, thereby reducing a risk that the side frame portion 10 is broken and a risk that a joint between the side frame portion 10 and the middle frame portion 20 is broken, to improve the structural reliability of the mounting frame 300.

Of course, the present application is not limited thereto. In some other embodiments of the present application, the side frame portion 10 may be configured to extend in other directions. For example, at least a part of the side frame portion 10 extends in a width direction (for example, the second direction Y shown in FIG. 2) of the underbody longitudinal beam 201, or extends obliquely to the width direction of the underbody longitudinal beam 201, and so on. In addition, in some other embodiments of the present application, the side frame portion 10 may also be sandwiched between the battery 100 and other positions on the vehicle body 200, for example, sandwiched between the battery 100 and a vehicle chassis at two sides of the underbody longitudinal beam 201. Details are not described herein.

In some embodiments, the mounting portion 30 includes a first mounting portion 31 disposed on the side frame portion 10. That is, the first mounting portion 31 is disposed on at least one of the side frame portions 10. The first mounting portion 31 is configured to connect the mounting frame 300 to the vehicle body 200.

In the above technical solution, since the side frame portions 10 are located at the two sides of the vertical space in which the underbody longitudinal beam 201 is located, and the first mounting portion 31 is disposed on the side frame portion 10, it indicates that the first mounting portion 31 may also be located at an outer side (a left side and/or a right side) of the underbody longitudinal beam 201, on which side there is sufficient space for use. Therefore, on the one hand, the connection of the first mounting portion 31 with the vehicle body 200 is facilitated, and on the other hand, the flexible design of the first mounting portion 31 is facilitated.

In some embodiments, as shown in FIG. 2 to FIG. 4, the side frame portion 10 includes a first extension portion 11 that extends in the length direction of the underbody longitudinal beam 201 and is sandwiched between the battery 100 and the side wall of the underbody longitudinal beam 201. The first mounting portion 31 is disposed on the first extension portion 11, and is configured to connect to the side wall of the underbody longitudinal beam 201. In this embodiment, at least a part of the side frame portion 10 is the first extension portion 11. When the entire side frame portion 10 is the first extension portion 11, the side frame portion 10 extends in the length direction of the underbody longitudinal beam 201, and is sandwiched between the battery 100 and the underbody longitudinal beam 201.

In the above technical solution, the first mounting portion 31 is disposed on the first extension portion 11 that is sandwiched between the battery 100 and the underbody longitudinal beam 201, so that the first mounting portion 31 is also easily concealed and protected by the battery 100 and the underbody longitudinal beam 201, thereby improving the reliability of connection of the first mounting portion 31 with the underbody longitudinal beam 201.

In some embodiments, the first mounting portion 31 is connected to the side wall of the underbody longitudinal beam 201 through a first fastener extending in a transverse direction. The specific form of the first fastener is not limited. For example, the first fastener may be a screw, a bolt, a rivet, or the like.

In the above technical solution, since the first extension portion 11 is sandwiched between the battery 100 and the underbody longitudinal beam 201, the first mounting portion 31 is connected to the side wall of the underbody longitudinal beam 201 through the first fastener extending in the transverse direction, thereby making use of a relative positional relationship of the first extension portion 11 with the underbody longitudinal beam 201 to simplify the connection of the first mounting portion 31 with the vehicle body 200 and improve the reliability of connection of the first mounting portion 31 with the vehicle body 200.

In addition, by this connection manner, it is only necessary to drill holes in or mount nuts on the first extension portion 11 and the side wall of the underbody longitudinal beam 201, and there is no need to dispose a connection support having complex structures or adjusting connection directions, so that the structures and machining of the first extension portion 11 and the underbody longitudinal beam 201 can be simplified. In addition, the fitting compactness of the first extension portion 11 with the underbody longitudinal beam 201 can be improved to save space, which is conducive to disposing the battery 100 having a larger capacity.

In some embodiments, as shown in FIG. 2 to FIG. 4, the first extension portion 11 is provided with a plurality of first mounting portions 31 that are disposed spaced apart in the length direction of the underbody longitudinal beam 201. In the above technical solution, since the plurality of first mounting portions 31 are disposed spaced apart in the length direction of the underbody longitudinal beam 201, and space of the first extension portion 11 can be fully used, more first mounting portions 31 are disposed to improve the reliability of connection of the mounting frame 300 with the vehicle body 200. In addition, the plurality of first mounting portions 31 are not likely to interfere with the underbody longitudinal beam when being connected to the underbody longitudinal beam 201, thereby facilitating the connection operation.

In some embodiments, as shown in FIG. 5, the mounting frame 300 includes a frame body 40 and a mounting lug 33. The mounting lug 33 is fitted to the frame body 40. The mounting lug 33 defines the first mounting portion 31.

In the above technical solution, the first mounting portion 31 is defined by the mounting lug 33 fitted to the frame body 40, so that the shape and size of the mounting lug 33 can be adjusted to meet the design and machining requirements of the first mounting portion 31, thereby simplifying the design and machining of the frame body 40, and meeting the structural and dimensional requirements of the frame body 40 itself.

It should be noted that the structure of the frame body 40 is not limited. For example, a part of the frame body 40 may serve as at least a part of the side frame portion 10, and the remaining part of the frame body 40 may serve as at least a part of the middle frame portion 20.

Of course, the present application is not limited thereto. For example, in some other embodiments of the present application, the first mounting portion 31 may be directly machined on the frame body 40, thereby simplifying the assembly process.

In some embodiments, as shown in FIG. 5, the mounting lug 33 is detachably connected to the frame body 40. For example, when the mounting lug 33 is damaged or contaminated, the mounting lug 33 may be removed for an operation such as circumstance or replacing. For another example, when the mounting lug 33 can be of a plurality of specifications, different mounting lugs 33 may be replaced to adapt to the mounting requirements of different vehicle models.

In some embodiments, as shown in FIG. 5, the mounting frame 300 further includes a gasket. The gasket is detachably disposed between the mounting lug 33 and the frame body 40. In this way, it is possible to determine whether to mount the gasket or select the specific specification of the gasket to be mounted according to an actual situation of the vehicle model and an actual situation of the mounting point on the vehicle body 200, to adapt to the mounting requirements of different vehicle models.

For example, when the side frame portion 10 includes the first extension portion 11 that extends in the length direction of the underbody longitudinal beam 201 and is sandwiched between the battery 100 and the underbody longitudinal beam 201, and the first mounting portion 31 is disposed on the first extension portion 11 and configured to connect to the side wall of the underbody longitudinal beam 201, the arrangement of gaskets of different specifications between the mounting lug 33 and the frame body 40 can meet the mounting requirements of underbody longitudinal beam 201 of different widths, thereby improving the range of application of the mounting frame 300.

In some embodiments, as shown in FIG. 5, each side frame portion 10 is provided with a first mounting portion 31. Therefore, the mounting frame 300 may be connected to the vehicle body 200 at two sides of the underbody longitudinal beam 201, thereby improving the reliability of connection of the mounting frame 300 with the vehicle body 200, and further improving the stability of the battery 100 carried on the vehicle 1000.

It should be noted that the structures of the first mounting portions 31 on the two side frame portions 10 may be the same, or may be different, and positions of the first mounting portions 31 on the two side frame portions 10 may be symmetrical, or may be staggered, which is not limited herein and will not be described in detail.

In some embodiments, as shown in FIG. 5, the mounting portion 30 includes a first connection portion 50 disposed on the side frame portion 10, and the first connection portion 50 is configured to connect the mounting frame 300 to the battery 100. That is, at least one side frame portion 10 is provided with the first connection portion 50, and the battery 100 is directly or indirectly connected to the first connection portion 50, to implement the connection of the battery 100 with the mounting frame 300.

In the above technical solution, the first connection portion 50 is disposed to connect the battery 100, so that the stability and reliability of the fitting of the battery 100 and the mounting frame 300 can be improved, thereby improving the stability of the battery 100 carried on the vehicle 1000. In addition, by disposing the first connection portion 50, the mounting of the battery 100 to the mounting frame 300 can be achieved. It is not necessary to configure the mounting frame 300 as a bracket for supporting the battery 100. Of course, the mounting frame 300 may also be configured as a bracket for supporting the battery 100, so that the mounting frame 300 can be flexibly disposed.

In addition, by disposing the first connection portion 50 on the side frame portion 10, since the side frame portions 10 are located at the two sides of vertical space in which the underbody longitudinal beam 201 is located, the first connection portion 50 may also be located at an outer side (a left side and/or a right side) of the underbody longitudinal beam 201, on which side there is sufficient space for use. Therefore, on the one hand, the connection of the first connection portion 50 with the battery 100 is facilitated, and on the other hand, the flexible design of the first connection portion 50 is facilitated.

In some embodiments, as shown in FIG. 5 to FIG. 7, the first connection portion 50 is located between the battery 100 and the side wall of the underbody longitudinal beam 201 of the vehicle body 200.

In the above technical solution, since the first connection portion 50 is located between the battery 100 and the side wall of the underbody longitudinal beam 201 of the vehicle body 200, the first connection portion 50 can be desirably concealed and protected by the battery 100 and the vehicle body 200, so that the probability that the first connection portion 50 is corroded by muddy water or is damaged by an impact from a foreign object is reduced, thereby improving the reliability of connection of the battery 100 with the mounting frame 300, and facilitating the removal and replacement of the battery 100.

In addition, since the first connection portion 50 is located between the battery 100 and the side wall of the underbody longitudinal beam 201 of the vehicle body 200, the first connection portion 50 is close to the underbody longitudinal beam 201, and the deformation of the mounting frame 300 at the position of the first connection portion 50 is relatively small, so that the positional precision of the first connection portion 50 can be improved. In addition, when the two sides of the underbody longitudinal beam 201 are each provided with the first connection portion 50, a relative distance between the first connection portions 50 at the two sides of the underbody longitudinal beam 201 is relatively small, and the relative positional precision of the first connection portions 50 at the two sides is relatively high. Therefore, the alignment and connection of the battery 100 with the first connection portion 50 is easily implemented, thereby improving the assembly efficiency of the battery 100.

In the related art, for some mounting carriers configured to mount batteries to vehicles, battery swapping locks are disposed around the battery. The battery swapping lock is exposed to the outside. During the operation of the vehicle, mud, splashed water, and the like may affect the battery swapping lock. After the vehicle operates for a period of time, usually, the battery swapping lock is corroded, and consequently, battery swapping cannot be performed. In addition, since the battery swapping locks are arranged around the battery, the spacing between the battery swapping locks is large, and the deformation of the mounting carrier at the position of the battery swapping lock is relatively large, so the fitting precision of the battery swapping lock is low, affecting the battery swapping efficiency. In some embodiments of the present application, the connection portion is entirely disposed between the battery 100 and the side wall of the underbody longitudinal beam 201, so that the above technical problem can be effectively resolved.

When the first connection portion 50 is located between the battery 100 and the side wall of the underbody longitudinal beam 201 of the vehicle body 200, in some embodiments, as shown in FIG. 5 to FIG. 7, the first connection portion 50 includes a plurality of connection sub-portions 51 disposed spaced apart in the length direction (for example, the first direction X shown in FIG. 1 and FIG. 2) of the underbody longitudinal beam 201.

In the above technical solution, when the first connection portion 50 is located between the battery 100 and the side wall of the underbody longitudinal beam 201 of the vehicle body 200, since the plurality of connection sub-portions 51 are disposed spaced apart in the length direction of the underbody longitudinal beam 201, and space can be fully used, more connection sub-portions 51 are disposed to improve the reliability of connection of the mounting frame 300 with the battery 100. In addition, the plurality of connection sub-portions 51 are not likely to interfere with the battery when being connected to or disconnected from the battery 100, thereby facilitating the removal and replacement of the battery 100.

In some embodiments, the first connection portion 50 may be detachably connected to the battery 100, so that the battery 100 can be removed and replaced.

For example, as shown in FIG. 5 to FIG. 7, the mounting frame 300 may include a frame body 40 and a connection lock 52. The connection lock 52 is fitted to the frame body 40. The connection lock 52 forms the first connection portion 50. The connection lock 52 has a locked state for locking the battery 100 and an unlocked state for releasing the battery 100. Therefore, the first connection portion 50 can be detachably connected to the battery 100, so that the battery 100 can be removed and replaced.

In the above technical solution, the first connection portion 50 is defined by the connection lock 52 fitted to the frame body 40, so that different forms of connection locks 52 may be selected or designed, to meet the mounting requirements of different batteries 100, thereby simplifying the design and machining of the frame body 40, and meeting the structural and dimensional requirements of the frame body 40 itself.

It should be noted that the structure of the frame body 40 is not limited. For example, a part of the frame body 40 may be used as at least a part of the side frame portion 10, and the remaining part of the frame body 40 may be used as at least a part of the middle frame portion 20.

Of course, the present application is not limited thereto. For example, in some other embodiments of the present application, the first connection portion 50 may also be directly machined on the frame body 40, thereby simplifying the assembly process.

It should be noted that the specific structure and form of the connection lock 52 are not limited, and the connection lock may be, for example, a snap-in latch or a bolt-type fastener. For example, when the connection lock 52 is the snap-in latch, as shown in FIG. 5, the connection lock 52 is accommodated in the frame body 40. The frame body 40 is provided with a hanging hole with an open bottom. The battery 100 may be provided with a mounting pin. The mounting pin is configured to extend upward into the hanging hole and is in locking fit with the connection lock 52, thereby facilitating the assembly of the battery 100 with the mounting frame 300. For another example, when the connection lock 52 is the bolt-type fastener, the connection lock 52 may be a bolt or a nut whose axis extending in a vertical direction, and is configured to fit to the nut or the bolt on the battery 100, thereby facilitating the assembly of the battery 100 with the mounting frame 300. Details are not described herein again.

For example, the frame body 40 may include two sheet metal parts that are connected through welding. An accommodating cavity is defined between the two sheet metal parts. The connection lock 52 is disposed in the accommodating cavity. A fixing point and the hanging hole are formed on one of the sheet metal parts. The other sheet metal part is provided with the mounting portion 30. The connection lock 52 may be fixed to the fixing point by using a fastener such as a bolt, and then the sheet metal part is welded to the other sheet metal part. Then, the mounting frame 300 is mounted to the vehicle body 200 through the mounting portion 30. Therefore, the structure of the frame body 40 is simple, and the position of the connection lock 52 is concealed, thereby improving the reliability of the connection lock 52 and the battery swapping effectiveness.

In addition, a water blocking member, such as a waterproof curtain, may be disposed at the position of the hanging hole. The waterproof curtain may be opened when a padlock pin is loaded into the hanging hole, and the waterproof curtain may restore a state of blocking the hanging hole when the padlock pin is removed from the hanging hole, thereby achieving a waterproof effect and further protecting the connection lock 52.

In some embodiments, as shown in FIG. 5 to FIG. 7, each side frame portion 10 is provided with a first connection portion 50. Therefore, the mounting frame 300 and the battery 100 may be connected at the two sides of the underbody longitudinal beam 201, so that reliability of connection of the mounting frame 300 with the battery 100 can be improved, thereby improving the stability of the battery 100 carried on the vehicle 1000.

Of course, the present application is not limited thereto. For example, in some other embodiments of the present application, the mounting frame 300 may further be provided with other connection portions configured to connect the mounting frame 300 to the battery 100, for example, a second connection portion extending into the underbody longitudinal beam 201. Details are not described herein.

It should be noted that the structures of the first connection portions 50 on the two side frame portions 10 may be the same, or may be different, and the positions of the first connection portions 50 on the two side frame portions 10 may be symmetrical, or may be staggered, which is not limited herein and will not be described in detail.

In some embodiments, as shown in FIG. 5 to FIG. 7, at least a part of the middle frame portion 20 is located below the underbody longitudinal beam 201, and an avoidance space 21 having an opening at a top thereof and configured to avoid the underbody longitudinal beam 201 is defined between the middle frame portion 20 and the side frame portion 10.

In the above technical solution, the mounting frame 300 can be fitted to the underbody longitudinal beam 201 from bottom to top, thereby simplifying the mounting of the mounting frame 300 to the vehicle body 200, improving the assembly efficiency, and simplifying the machining of the underbody longitudinal beam 201. In addition, at least a part of the side frame portion 10 may be higher than the lower end of the underbody longitudinal beam 201, so that it is conducive to disposing the side frame portion 10 and even disposing the battery 100 in the both horizontal side spaces of the underbody longitudinal beam 201, thereby improving the space utilization rate.

In some embodiments, as shown in FIG. 5 and FIG. 6, two ends of the middle frame portion 20 are respectively connected to the lower ends of the side frame portions 10 at the two sides.

In the above technical solution, on the one hand, it is conducive to connecting the side frame portion 10 to the middle frame portion 20, so that at least a part of the side frame portion 10 and at least a part of the middle frame portion 20 can be integrally formed easily, and the connection strength of the side frame portion and the middle frame portion is improved. On the other hand, it is conducive to increasing a height of the side frame portion 10 relative to the underbody longitudinal beam 201, to reduce as much as possible a space occupied below the underbody longitudinal beam 201 by the side frame portion 10 in the vertical direction, thereby using the saved space to dispose the battery 100.

Of course, the present application is not limited thereto. The two ends of the middle frame portion 20 may also be respectively connected to other positions on the side frame portion 10. For example, in some other embodiments, the two ends of the middle frame portion 20 may also be respectively connected to an upper end or a middle portion or the like of the side frame portion 10, and details are not described herein again. In addition, at least a part of the side frame portion 10 and at least a part of the middle frame portion 20 may not be integrally formed. For example, the side frame portion 10 and the middle frame portion 20 may be separate frames and assembled and connected, which is not limited herein.

In some embodiments, as shown in FIG. 2, FIG. 3, FIG. 8, and FIG. 9, the middle frame portion 20 is provided with an upward protrusion 22. The upward protrusion 22 extends into a position between two side longitudinal beams 202 of the underbody longitudinal beam 201. A cavity formed below the upward protrusion 22 is configured to accommodate a part of the battery 100.

In the above technical solution, since a part of the battery 100 may extend into the cavity formed below the upward protrusion 22, and the part is located between the two side longitudinal beams 202 of the underbody longitudinal beam 201, the underbody space can be fully used to dispose the battery 100, thereby improving the electric capacity of the battery 100.

In some embodiments, as shown in FIG. 2, FIG. 5, FIG. 8, and FIG. 9, the middle frame portion 20 is provided with an avoidance opening 23, and the avoidance opening 23 is disposed corresponding to a space between the two side longitudinal beams 202 of the underbody longitudinal beam 201.

In the above technical solution, a part of the battery 100 may extend, through the avoidance opening 23, into the position between the two side longitudinal beams 202 of the underbody longitudinal beam 201, so that the underbody space can be fully used to dispose the battery 100, and the electric capacity of the battery 100 can be improved. In addition, it is easy to machine the avoidance opening 23, so costs are low.

In some embodiments, as shown in FIG. 2, FIG. 3, FIG. 8, and FIG. 9, the middle frame portion 20 is provided with the upward protrusion 22, and the middle frame portion 20 is provided with the avoidance opening 23. In this case, a part of the battery 100 may extend, through the avoidance opening 23, into the cavity formed below the upward protrusion 22, to be located between the two side longitudinal beams 202 of the underbody longitudinal beam 201, so that the underbody space can also be fully used to dispose the battery 100, and the electric capacity of the battery 100 can be improved.

For example, the middle frame portion 20 includes a first sub-frame 24 and a second sub-frame 25. Two ends of the first sub-frame 24 are respectively connected to lower ends of the two side frame portions 10. Two ends of the second sub-frame 25 are respectively connected to the two ends of the first sub-frame 24. The second sub-frame 25 projects upward relative to the first sub-frame 24 and forms the upward protrusion 22. The avoidance opening 23 is formed in the first sub-frame 24 and is formed corresponding to the cavity below the upward protrusion 22. Therefore, the structure of the middle frame portion 20 is simple, and the machining is facilitated. Of course, the present application is not limited thereto. In some other embodiments of the present application, the middle frame portion 20 may also be configured as an integrally formed part or the like, which is not limited herein.

In some embodiments, as shown in FIG. 5, the mounting portion 30 includes a second mounting portion 32 disposed on the middle frame portion 20, and the second mounting portion 32 is configured to connect to the underbody longitudinal beam 201.

In the above technical solution, the second mounting portion 32 is disposed by using the middle frame portion 20 connecting the side frame portions 10 at the two sides, so that the connection of the second mounting portion 32 with the underbody longitudinal beam 201 can be easily implemented. The underbody longitudinal beam 201 is used to connect the mounting frame 300, thereby reducing the limitation to the vehicle model and improving an application scope of the mounting frame 300.

In addition, when the mounting portion 30 includes both the first mounting portion 31 and the second mounting portion 32, the mounting frame 300 can be connected to the vehicle body 200 from different positions, thereby improving the reliability of connection of the mounting frame 300 with the vehicle body 200.

In some embodiments, the second mounting portion 32 is connected to a bottom wall of the underbody longitudinal beam 201 through a second fastener extending in the vertical direction. The specific form of the second fastener is not limited. For example, the second fastener may be a screw, a bolt, a rivet, or the like.

In the above technical solution, the second mounting portion 32 is connected to the bottom wall of the underbody longitudinal beam 201 by using the second fastener extending in the vertical direction, thereby making use of a relative positional relationship of the middle frame portion 20 with the underbody longitudinal beam 201 to simplify the connection of the second mounting portion 32 with the underbody longitudinal beam 201 and improve the reliability of connection of the second mounting portion 32 with the underbody longitudinal beam 201.

In addition, by this connection manner, it is only necessary to drill holes in or mount nuts on the middle frame portion 20 and the bottom wall of the underbody longitudinal beam 201, and there is no need to dispose a connection support having complex structures or adjusting connection directions, so that the structures and machining of the first middle frame portion 20 and the underbody longitudinal beam 201 can be simplified. In addition, the fitting compactness of the middle frame portion 20 with the underbody longitudinal beam 201 can be improved to save space, which is conducive to disposing the battery 100 having a larger capacity.

In some embodiments, as shown in FIG. 5 and FIG. 6, the middle frame portion 20 includes second extension portion 26 located below the two side longitudinal beams 202 of the underbody longitudinal beam 201 and extending in the length direction of the underbody longitudinal beam 201, and a plurality of second mounting portions 32 that are disposed spaced apart in the length direction of the underbody longitudinal beam 201 are disposed on the second extension portion 26. That is, the second extension portion 26 is disposed below each of the two side longitudinal beams 202 of the underbody longitudinal beam 201, and the plurality of second mounting portions 32 are disposed on each second extension portion 26, so that the second mounting portion 32 may be connected to a bottom surface of the longitudinal beam 202 at each side.

In the above technical solution, by using the structural features of the underbody longitudinal beam 201, the second extension portion 26 are respectively disposed below the two side longitudinal beams 202 of the underbody longitudinal beam 201, and the second mounting portion 32 is disposed on the second extension portion 26, so that the connection of the second mounting portion 32 with the two side longitudinal beams 202 of the underbody longitudinal beam 201 can be easily implemented. In addition, since the plurality of second mounting portions 32 are disposed spaced apart in the length direction of the underbody longitudinal beam 201, space of the second extension portion 26 can be fully used, and a larger number of second mounting portions 32 are disposed, thereby improving the reliability of connection of the mounting frame 300 with the vehicle body 200. In addition, the plurality of second mounting portions 32 are not likely to interfere with the underbody longitudinal beam when being connected to the underbody longitudinal beam 201, thereby facilitating the connection operation. In addition, since the second extension portions 26 at the two sides are both provided with the second mounting portion 32, reliability of connection of the mounting frame 300 with the underbody longitudinal beam 201 can be improved, thereby improving the stability of the battery 100 carried on the vehicle 1000.

In some embodiments, a part of the battery 100 may be located below the underbody longitudinal beam 201. In this case, the second mounting portion 32 may be sandwiched between the battery 100 and the underbody longitudinal beam 201, so that the second mounting portion 32 is easily concealed and protected by the battery 100 and the underbody longitudinal beam 201, thereby improving the reliability of connection of the second mounting portion 32 with the underbody longitudinal beam 201.

Of course, the present application is not limited thereto. In some other embodiments of the present application, the second mounting portion 32 may also be connected to other positions on the underbody longitudinal beam 201 through structural fitting and design of the underbody longitudinal beam 201 and the middle frame portion 20. For example, a cross beam 203 connecting the two side longitudinal beams 202 may further be disposed between the two side longitudinal beams 202 of the underbody longitudinal beam 201, and the second mounting portion 32 may be located below the cross beam 203 and connected to a bottom surface of the cross beam 203. Alternatively, the second mounting portion 32 may also be connected to an inner side surface of the longitudinal beam 202 or front and rear end surfaces of the cross beam 203, and details are not described herein.

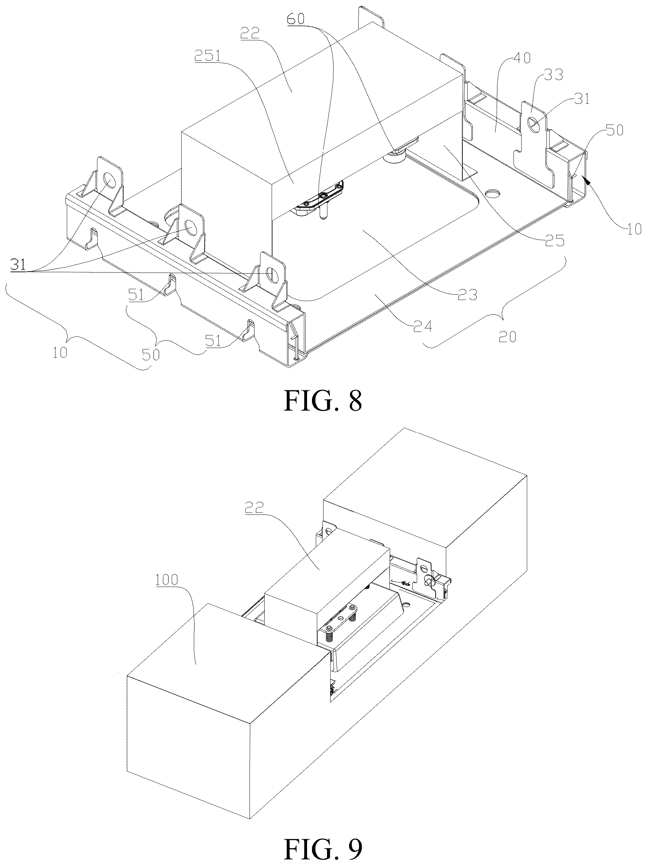

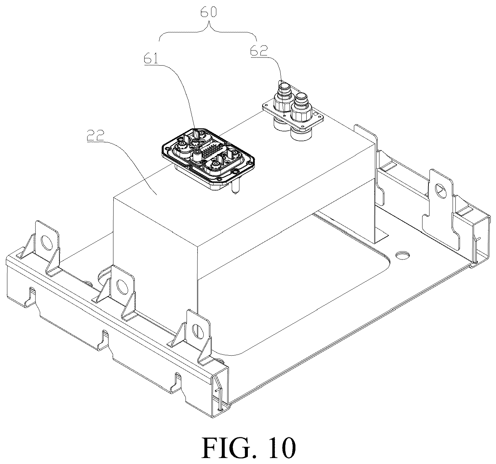

In some embodiments, as shown in FIG. 8 and FIG. 10, the mounting frame 300 is provided with a docking portion 60, and the docking portion 60 is configured to be docked with a liquid path and/or a circuit on the battery 100.

In the above technical solution, the mounting frame 300 may be docked with a circuit and/or a liquid path on the vehicle body 200, and the docking portion 60 that can be docked with the liquid path and/or the circuit on the battery 100 is disposed on the middle frame portion 20, to implement current conduction, liquid conduction, or both current conduction and liquid conduction between the vehicle body 200 and the battery 100. For example, when the docking portion 60 implements current conduction, the docking portion may be configured to transfer a current between the vehicle 1000 and the battery 100, so that the battery 100 supplies power to the vehicle 1000, the vehicle 1000 controls the battery 100, and the like. For example, when the docking portion 60 implements liquid conduction, the docking portion may be configured to perform heat transfer between a refrigerating medium system of the vehicle 1000 and the battery 100, so that a temperature of the battery 100 is regulated by using the refrigerating medium system, to improve operational reliability and safety of the battery 100. Alternatively, the refrigerating medium system may be used to absorb waste heat of the battery 100, to satisfy the heat source requirement of a heat pump air-conditioning system of the vehicle 1000. Details are not described herein.

Therefore, by disposing the docking portion 60 on the mounting frame 300, the requirement for docking of the battery 100 with the circuit and/or the liquid path of the vehicle body 200 can be satisfied through the structural design of the mounting frame 300, thereby simplifying the structural design of the vehicle body 200 and the battery 100.

For example, in some embodiments, as shown in FIG. 8 and FIG. 10, the docking portion 60 may include a first docking structure and a second docking structure. The first docking structure is configured to be docked with the circuit on the battery 100, and the second docking structure is configured to be docked with the liquid path on the battery 100. A relative position of the first docking structure and the second docking structure is not limited. For example, the first docking structure and the second docking structure may be horizontally spaced, for example, may be spaced in a left-right direction or spaced in a front-rear direction, so that the first docking structure and the second docking structure do not interfere with each other when separately performing docking.

It should be noted that the position at which the docking portion 60 is disposed is not limited, and may be specifically selected according to a form of the mounting frame 300.

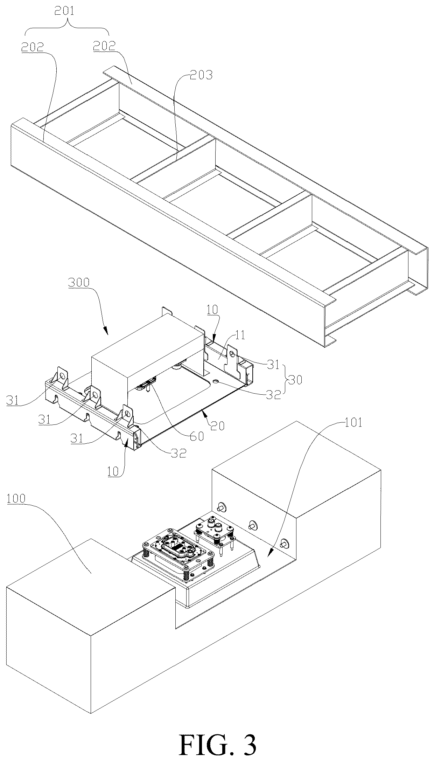

For example, in some embodiments, as shown in FIG. 8 and FIG. 10, when the mounting frame 300 includes the side frame portions 10 located at the two sides of the vertical space in which the underbody longitudinal beam 201 of the vehicle body 200 is located, and the middle frame portion 20 connecting the side frame portions 10 at the two sides, the docking portion 60 may be disposed on the middle frame portion 20. In conjunction with FIG. 3 and FIG. 4, the docking portion 60 is configured to be disposed between the two side longitudinal beams 202 of the underbody longitudinal beam 201.

In the above technical solution, since the docking portion 60 is disposed on the middle frame portion 20, and the middle frame portion 20 connects the side frame portions 10 at the two sides, the stability of the middle frame portion 20 is relatively high, which can improve the stability of the docking portion 60, thereby facilitating the improvement of the stability and reliability when the docking portion 60 is docked with the battery 100. In addition, since the docking portion 60 is located between the two side longitudinal beams 202 of the underbody longitudinal beam 201, the docking portion 60 can be protected by the underbody longitudinal beam 201, thereby reducing the probability that the docking portion 60 is damaged by impacts, alleviating a problem that the docking portion 60 is corroded by muddy water and the like and then fails, improving the docking reliability and stability, and reducing a risk of an electrical fault caused when the docking portion 60 is corroded by mud and splashed water. In addition, the docking portion 60 does not need to occupy a space beyond the underbody longitudinal beam 201, thereby saving a space easily and improving a capacity of the battery 100. In addition, disposing the docking portion 60 on the middle frame portion 20 does not interfere with the fitting of the mounting frame 300 with the underbody longitudinal beam 201, thereby facilitating the assembly of the mounting frame 300 to the vehicle body 200.

As shown in FIG. 8 and FIG. 10, when the middle frame portion 20 is provided with the upward protrusion 22, the upward protrusion 22 extends into the position between the two side longitudinal beams 202 of the underbody longitudinal beam 201, and the cavity formed below the upward protrusion 22 is configured to accommodate a part of the battery 100, the docking portion 60 may be disposed on a bottom wall of the upward protrusion 22. In this way, it can be easily implemented that the docking portion 60 is located between the two side longitudinal beams 202 of the underbody longitudinal beam 201, so that mounting the docking portion 60 can be simplified.

For example, as shown in FIG. 8, when the middle frame portion 20 includes the first sub-frame 24 and the second sub-frame 25, the two ends of the first sub-frame 24 are respectively connected to the lower ends of the two side frame portions 10, the two ends of the second sub-frame 25 are respectively connected to the two ends of the first sub-frame 24, the second sub-frame 25 projects upward relative to the first sub-frame 24 and forms the upward protrusion 22, the first sub-frame 24 is provided with the avoidance opening 23, and the avoidance opening 23 is disposed corresponding to the space between two side longitudinal beams 202 of the underbody longitudinal beam 201, a docking structure on the battery 100 is configured to extend, through the avoidance opening 23, into the cavity formed below the upward protrusion 22.

In some embodiments, as shown in FIG. 8, the mounting frame 300 includes a baffle 251 disposed on a peripheral side of the docking portion 60, where the peripheral side refers to a peripheral side in a horizontal orientation, for example, left and right sides, or front and rear sides or the like. Therefore, the baffle 251 is disposed on the mounting frame 300, so that the docking portion 60 can be protected by the baffle 251, thereby reducing the probability that the docking portion 60 is damaged by impacts and alleviating the problem that the docking portion 60 is corroded by muddy water and the like and then fails.

A disposing manner of the baffle 251 is not limited. For example, the baffle 251 may be a part of the middle frame portion 20. Further, the baffle 251 may be integrally formed with the upward protrusion 22. Alternatively, in some other embodiments of the present application, the baffle 251 may be mounted to the side frame portion 10 or the middle frame portion 20 in an assembly manner, which is not limited herein.

Of course, the present application is not limited thereto. In some other embodiments of the present application, when the mounting frame 300 is in other forms, the docking portion 60 may also be disposed at other positions on the mounting frame 300. For example, the docking portion 60 may be disposed at the two sides of the underbody longitudinal beam 201 and the like. Details are not described herein.

In some embodiments, a docking surface of the docking portion 60 may be disposed vertically downward. In this way, as the battery 100 is lifted upward, docking and fitting of the docking portion 60 with the battery 100 can be implemented, thereby facilitating docking of the battery 100 with the docking portion 60. In addition, such a docking manner reduces spaced required for movement of the battery 100.

In some embodiments, a docking surface of the docking portion 60 may be disposed obliquely downward. In this way, as the battery 100 is lifted obliquely upward, docking and fitting of the docking portion 60 with the battery 100 can be implemented, thereby facilitating docking of the battery 100 with the docking portion 60.

In some embodiments, a docking surface of the docking portion 60 may be horizontally disposed. In this way, as the battery 100 is first lifted upward and then moved horizontally, docking and fitting of the docking portion 60 with the battery 100 can be implemented, thereby facilitating docking of the battery 100 with the docking portion 60.

When the mounting frame 300 includes the side frame portions 10 located at the two sides of the vertical space in which the underbody longitudinal beam 201 of the vehicle body 200 is located, and the middle frame portion 20 connecting the side frame portions 10 at the two sides, in some embodiments, the mounting frame 300 may include an integrally formed integral frame. The integral frame forms at least a part of the side frame portion 10 and at least a part of the middle frame portion 20, respectively. Therefore, the overall structural strength of the mounting frame 300 can be improved, thereby facilitating the improvement of the stability and reliability when the battery 100 is carried on the vehicle 1000.

Of course, the present application is not limited thereto. In some other embodiments of the present application, the side frame portion 10 and the middle frame portion 20 may also be disposed as separate structures and assembled and connected. Details are not described herein again.

It should be noted that a form of the mounting frame 300 is not limited thereto. For example, the mounting frame 300 may be constructed in a shape that does not cross the underbody longitudinal beam 201. For example, the mounting frame 300 may be entirely located at a left side of the underbody longitudinal beam 201, or entirely located at a right side of the underbody longitudinal beam 201, or entirely located below the underbody longitudinal beam 201. Details are not described herein.

In some embodiments of the present application, the mounting frame 300 is provided with a connection portion, and the connection portion is configured to connect the mounting frame 300 to the battery 100. The battery 100 may be directly or indirectly connected to the connection portion, to connect the battery 100 to the mounting frame 300.

In the above technical solution, the connection portion is disposed to connect the battery 100, so that the stability and reliability of the fitting of the battery 100 and the mounting frame 300 can be improved, thereby improving the stability of the battery 100 carried on the vehicle 1000. In addition, by disposing the connection portion, the mounting of the battery 100 to the mounting frame 300 can be achieved. It is not necessary to configure the mounting frame 300 as a bracket for supporting the battery 100. Of course, the mounting frame 300 may also be configured as a bracket for supporting the battery 100, so that the mounting frame 300 can be flexibly disposed. It may be understood that if the bracket is in the shape of a tray and is supported at a bottom of the battery and surrounds the battery, the bracket occupies a relatively much space.

It should be noted that a disposing position of the connection portion on the mounting frame 300 is not limited, and may be specifically selected according to the structural features of the mounting frame 300 and the position at which the mounting frame is fitted to the vehicle body 200. For example, when the mounting frame 300 is in a form including the side frame portion 10 and the middle frame portion 20 as described above, the connection portion may include the first connection portion 50 and/or the second connection portion described above, but the present application is not limited thereto.

In some embodiments of the present application, the connection portion may be detachably connected to the battery 100. The structure of the connection portion is not limited. For example, the connection portion may be a snap-in latch or a lock pin that is in a snap fit, or may be a bolt-type fastener or a nut that is in a thread fit, without limitation herein. In the above technical solution, the connection portion is detachably connected to the battery 100, so that the battery 100 can be removed and replaced.

In some embodiments, at least a part of the connection portion is located between the battery 100 and the vehicle body 200. In this way, the position of at least a part of the connection portion is concealed, so that the connection portion is not likely to be damaged by impacts or corroded by muddy water and the like, thereby improving the connection reliability and stability of the mounting frame 300 with the battery 100, and improving the reliability and stability of the battery 100 carried on the vehicle 1000.

In some embodiments, at least a part of the mounting portion 30 is located between the battery 100 and the vehicle body 200. In this way, the position of at least a part of the mounting portion 30 is concealed, so that the mounting portion is not likely to be damaged by impacts or corroded by muddy water and the like, thereby improving the connection reliability and stability of the mounting frame 300 with the vehicle body 200 and improving the reliability and stability of the battery 100 carried on the vehicle 1000.

It should be noted that, the position at which the mounting portion 30 is disposed on the mounting frame 300 is not limited, and may be specifically selected according to the structural features of the mounting frame 300 and the position at which the mounting frame is fitted to the vehicle body 200. For example, when the mounting frame 300 is in a form including the side frame portion 10 and the middle frame portion 20 as described above, the mounting portion 30 may include the first mounting portion 31 and/or the second mounting portion 32 described above, but the present application is not limited thereto.

In some embodiments, at least a part of the mounting frame 300 is located between the battery 100 and the underbody longitudinal beam 201 of the vehicle body 200, so that at least a part of the mounting portion 30 can be connected to the underbody longitudinal beam 201.

In the above technical solution, the mounting frame 300 and the underbody longitudinal beam 201 can be reliably connected easily, and mounting can be achieved for various vehicle models, so that an application range is wide.

In addition, the present application further provides a vehicle 1000, including a vehicle body 200 and the above mounting frame 300, where the mounting frame 300 is connected to the vehicle body 200. Therefore, the design and machining difficulties of the battery 100 and the vehicle body 200 can be reduced, thereby facilitating satisfy the requirements for carrying the battery 100 on the vehicle 1000.

In some embodiments, as shown in FIG. 1 to FIG. 3, the vehicle body 200 includes an underbody longitudinal beam 201, and the vehicle 1000 includes a plurality of mounting frames 300 sequentially disposed in a length direction of the underbody longitudinal beam 201.

Therefore, the size of each mounting frame 300 may be relatively small, so that the shape precision of each mounting frame 300 can be improved, the connection of each mounting frame 300 with the vehicle body 200 is facilitated, and the structural strength of each mounting frame 300 is improved easily, thereby improving the stability of the battery 100 carried on the vehicle 1000.

It should be noted that when there are the plurality of mounting frames 300, the plurality of mounting frames 300 may be jointly used to mount a battery 100, or each mounting frame 300 may be used to mount a battery 100. This may be set according to an actual situation of the battery 100, and is not limited herein.

In some embodiments, the vehicle 1000 further includes a battery 100. The battery 100 is mounted to the vehicle body 200 through the mounting frame 300. A structural form of the battery 100 is not limited. For example, in an example shown in FIG. 1 to FIG. 3, the vehicle body 200 includes the underbody longitudinal beam 201. The battery 100 is provided with a recess 101 having an opening at a top thereof and configured to accommodate the underbody longitudinal beam 201. The battery 100 includes battery cells disposed below the recess 101 and at two sides thereof. The mounting frame 300 is sandwiched between the recess 101 and the underbody longitudinal beam 201.

In the above technical solution, the battery 100 can make full use of a space to dispose a larger number of battery cells, thereby improving the electric capacity of the battery 100. In addition, the battery 100 and the underbody longitudinal beam 201 can be used to protect the mounting frame 300, so that the position of the mounting frame 300 is concealed, and the mounting frame is not likely to be damaged by impacts or be corroded by muddy water and the like, thereby improving the reliability and stability of the battery 100 carried on the vehicle 1000.

Of course, the present application is not limited thereto. In some other embodiments of the present application, the battery 100 may also be disposed in other shapes, for example, located only at one side or a bottom side or the like of the underbody longitudinal beam 201, without limitation herein.

Hereinafter, referring to FIG. 1 to FIG. 4 and FIG. 8 to FIG. 10, the mounting frame 300 according to a specific embodiment of the present application is described.

The mounting frame 300 is configured to mount the battery 100 to the vehicle body 200. The mounting frame 300 includes side frame portions 10 and a middle frame portion 20. The two side frame portions 10 are respectively located at two sides of the underbody longitudinal beam 201 in a width direction. Two ends of the middle frame portion 20 are respectively connected to lower ends of the two side frame portions 10, so that an avoidance space 21 that is configured to avoid the underbody longitudinal beam 201 and is open at a top is formed between the two side frame portions 10 and the middle frame portion 20.

The mounting frame 300 is provided with a mounting portion 30 configured to connect the vehicle body 200. The mounting portion 30 includes a first mounting portion 31 disposed at the position of the side frame portion 10 facing a side wall of the underbody longitudinal beam 201, and a second mounting portion 32 disposed at the position of the middle frame portion 20 facing a bottom wall of the underbody longitudinal beam 201. For example, the mounting portion 30 may be fitted to a locking mechanism on the vehicle body 200 to achieve locking, or may be connected to the vehicle body 200 through a fastener.

A side of the side frame portion 10 facing away from the side wall of the underbody longitudinal beam 201 is provided with a connection portion configured to connect the battery 100. For example, the battery 100 is provided with the recess 101 for avoiding the underbody longitudinal beam 201, and a side wall of the recess 101 is provided with a mounting pin. During mounting, the mounting frame 300 is first mounted to the underbody longitudinal beam 201, and then the battery 100 is lifted from bottom to top, so that the mounting frame 300 extends into the recess 101 of the battery 100, and the mounting pin may be fitted to the connection portion to mount the battery 100 to the mounting frame 300.

Therefore, the mounting frame 300 occupies only a space in the recess 101 of the battery 100, so that a volume and a weight of the mounting frame 300 are saved, and an overall energy density is improved. In addition, since the mounting portion 30 and the connection portion are both located between the recess 101 of the battery 100 and the underbody longitudinal beam 201, precision of the mounting portion 30 and the connection portion is high, thereby effectively improving the mounting efficiency, the battery swapping efficiency, and the battery swapping success rate.

In addition, the connection portion may be located between the recess 101 and the side wall of the underbody longitudinal beam 201, and the mounting portion 30 may be located between the recess 101 and the underbody longitudinal beam 201, so that the battery 100 may block mud, splashed water, and the like, and the mud and the splashed water are prevented from contacting the mounting portion 30 and the connection portion, thereby improving the reliability and service life of the mounting portion 30 and the connection portion.

In addition, since the connection portion may be located between the recess 101 and the side wall of the underbody longitudinal beam 201, the deformation of the mounting frame 300 herein is relatively small, a spacing between adjacent connection portions is small, a spacing between adjacent connection sub-portions 51 in the connection portion is small, and the positional precision of the connection portion is relatively high, so that the battery swapping precision and battery swapping efficiency can be improved.

The middle frame portion 20 is provided with a docking portion 60, the vehicle body is provided with a first docking structure, and the battery 100 is provided with a second docking structure. The docking portion 60 is fitted to the first docking structure by docking on the one hand and fitted to the second docking structure by docking on the other hand, thereby implementing current conduction and liquid path conduction between the battery 100 and the vehicle 1000. The battery 100 may supply power to the vehicle 1000.

The middle frame portion is provided with an upward protrusion 22 extending into a position between two side longitudinal beams 202 of the underbody longitudinal beam 201. The docking portion 60 is disposed on the upward protrusion 22, so that the docking portion 60 may be located between the two side longitudinal beams 202 of the underbody longitudinal beam 201. The position herein is relatively concealed, so that corrosion by mud and splashed water may be blocked through the battery 100 and the underbody longitudinal beam 201, thereby reducing a risk of an electrical fault, and improving the reliability of a hydroelectric connection.

The docking portion 60 is disposed on a bottom wall of the upward protrusion 22 and a docking surface faces downward. When the battery 100 is lifted upward, docking may be completed naturally, thereby improving the assembly efficiency of the battery 100.

In one embodiment, at least a part of the side frame portion 10 and at least a part of the middle frame portion 20 are integrally formed parts, so that the structural strength of the mounting frame 300 is good, and the stability and reliability can be improved when the battery 100 is carried on the vehicle 1000.

It should be noted that embodiments in the present application and features in the embodiments may be mutually combined in a case that no conflict occurs.

The above descriptions are merely preferred embodiments of the present application and are not intended to limit the present application. For those skilled in the art, the present application may have various modifications and changes. Any modification, equivalent replacement, or improvement made without departing from the spirit and principle of the present application shall fall within the protection scope of the present application.

## Claims

1. A mounting frame, configured to mount a battery to a vehicle body, wherein the mounting frame is provided with a mounting portion, and the mounting portion is configured to connect the mounting frame to the vehicle body.

2. The mounting frame according to claim 1, wherein the mounting frame comprises two side frame portions and a middle frame portion connecting the two side frame portions, and the two side frame portions are configured to be respectively located at two sides of a vertical space in which an underbody longitudinal beam of the vehicle body is located.

3. The mounting frame according to claim 2, wherein at least a part of the side frame portion is configured to be higher than a lower end of the underbody longitudinal beam and located at a side of the underbody longitudinal beam.

4. The mounting frame according to claim 2 or 3, wherein the side frame portion is configured to be located between the vehicle body and the battery.

5. The mounting frame according to claim 4, wherein the side frame portion is configured to extend in a length direction of the underbody longitudinal beam, and is sandwiched between the battery and a side wall of the underbody longitudinal beam.

6. The mounting frame according to any one of claims 2 to 5, wherein the mounting portion comprises a first mounting portion disposed on the side frame portion.

7. The mounting frame according to claim 6, wherein the side frame portion comprises a first extension portion that extends in the length direction of the underbody longitudinal beam and is sandwiched between the battery and the side wall of the underbody longitudinal beam, and the first mounting portion is disposed on the first extension portion and is configured to connect to the side wall of the underbody longitudinal beam.

8. The mounting frame according to claim 7, wherein the first mounting portion is configured to connect to the side wall of the underbody longitudinal beam through a first fastener extending in a transverse direction.

9. The mounting frame according to claim 7 or 8, wherein a plurality of first mounting portions are disposed on the first extension portion, and the plurality of first mounting portions are configured to be disposed spaced apart in the length direction of the underbody longitudinal beam.

10. The mounting frame according to any one of claims 6 to 9, wherein the mounting frame comprises a frame body and a mounting lug, the mounting lug is fitted to the frame body, and the mounting lug defines the first mounting portion.

11. The mounting frame according to claim 10, wherein the mounting lug is detachably connected to the frame body.

12. The mounting frame according to claim 11, wherein the mounting frame further comprises a gasket, and the gasket is detachably disposed between the mounting lug and the frame body.

13. The mounting frame according to any one of claims 2 to 12, wherein the mounting portion comprises a first connection portion disposed on the side frame portion, and the first connection portion is configured to connect the mounting frame to the battery.

14. The mounting frame according to claim 13, wherein the first connection portion is configured to be located between the battery and the side wall of the underbody longitudinal beam.

15. The mounting frame according to claim 14, wherein the first connection portion comprises a plurality of connection sub-portions, and the plurality of connection sub-portions are configured to be disposed spaced apart in the length direction of the underbody longitudinal beam.

16. The mounting frame according to any one of claims 13 to 15, wherein the first connection portion is configured to detachably connect to the battery.

17. The mounting frame according to claim 16, wherein the mounting frame comprises a frame body and a connection lock, the connection lock is fitted to the frame body, the connection lock forms the first connection portion, and the connection lock has a locked state for locking the battery and an unlocked state for releasing the battery.

18. The mounting frame according to any one of claims 2 to 17, wherein at least a part of the middle frame portion is configured to be located below the underbody longitudinal beam, and an avoidance space having an opening at a top thereof and configured to avoid the underbody longitudinal beam is defined between the middle frame portion and the side frame portion.

19. The mounting frame according to claim 18, wherein the middle frame portion and two ends are respectively connected to lower ends of the side frame portions at the two sides.

20. The mounting frame according to claim 18 or 19, wherein the middle frame portion is provided with an upward protrusion, the upward protrusion is configured to extend into a position between two side longitudinal beams of the underbody longitudinal beam, and a cavity formed below the upward protrusion is configured to accommodate a part of the battery.

21. The mounting frame according to any one of claims 18 to 20, wherein the middle frame portion is provided with an avoidance opening, and the avoidance opening is configured to be formed corresponding to a space between the two side longitudinal beams of the underbody longitudinal beam.

22. The mounting frame according to any one of claims 2 to 21, wherein the mounting portion comprises a second mounting portion disposed on the middle frame portion, and the second mounting portion is configured to connect to the underbody longitudinal beam.

23. The mounting frame according to claim 22, wherein the second mounting portion is configured to connect to a bottom wall of the underbody longitudinal beam through a second fastener extending in a vertical direction.

24. The mounting frame according to claim 22 or 23, wherein the middle frame portion comprises two second extension portions, the two second extension portions are configured to be respectively located below the two side longitudinal beams of the underbody longitudinal beam and extend in the length direction of the underbody longitudinal beam, a plurality of second mounting portions are disposed on the second extension portion, and the plurality of second mounting portions are configured to be disposed spaced apart in the length direction of the underbody longitudinal beam.

25. The mounting frame according to any one of claims 2 to 24, wherein a docking portion is disposed on the middle frame portion, the docking portion is configured to be disposed between the two side longitudinal beams of the underbody longitudinal beam, and the docking portion is configured to be docked with a liquid path and/or a circuit on the battery.

26. The mounting frame according to claim 20, wherein a bottom wall of the upward protrusion is provided with a docking portion, and the docking portion is configured to be docked with a liquid path and/or a circuit on the battery.

27. The mounting frame according to claim 25 or 26, wherein the mounting frame comprises a baffle disposed on a peripheral side of the docking portion.

28. The mounting frame according to any one of claims 1 to 24, wherein the mounting frame is provided with a docking portion, and the docking portion is configured to be docked with a liquid path and/or a circuit on the battery.

29. The mounting frame according to any one of claims 25 to 28, wherein a docking surface of the docking portion is disposed vertically downward, or obliquely downward, or horizontally.

30. The mounting frame according to any one of claims 2 to 27, wherein the mounting frame comprises an integrally formed integral frame, and the integral frame forms at least a part of the side frame portion and at least a part of the middle frame portion, respectively.

31. The mounting frame according to any one of claims 1 to 30, wherein the mounting frame is provided with a connection portion, and the connection portion is configured to connect the mounting frame to the battery.

32. The mounting frame according to claim 31, wherein at least a part of the connection portion is configured to be located between the battery and the vehicle body.

33. The mounting frame according to claim 32, wherein the connection portion is configured to be located between the battery and the side wall of the underbody longitudinal beam of the vehicle body.

34. The mounting frame according to any one of claims 1 to 33, wherein at least a part of the mounting portion is configured to be located between the battery and the vehicle body.

35. The mounting frame according to claim 34, wherein at least a part of the mounting frame is configured to be located between the battery and the underbody longitudinal beam of the vehicle body, so that at least a part of the mounting portion is configured to connect to the underbody longitudinal beam.

36. A vehicle, comprising a vehicle body and the mounting frame according to any one of claims 1 to 35, wherein the mounting frame is connected to the vehicle body.

37. The vehicle according to claim 36, wherein the vehicle body comprises an underbody longitudinal beam, and the vehicle comprises a plurality of mounting frames sequentially disposed in a length direction of the underbody longitudinal beam.

38. The vehicle according to claim 36 or 37, further comprising a battery, and the battery is mounted to the vehicle body through the mounting frame.

39. The vehicle according to claim 38, wherein the vehicle body comprises an underbody longitudinal beam, the battery is provided with a recess having an opening at a top thereof and configured to accommodate the underbody longitudinal beam, the battery comprises battery cells disposed below the recess and at two sides thereof, and the mounting frame is sandwiched between the recess and the underbody longitudinal beam.
